# EUROPEAN PATENT APPLICATION

(11) **EP 4 002 298 A1**
(43) Date of publication of application: **25.05.2022**
(21) Application number: 21206618.7
(22) Date of filing: 05.11.2021
(51) Int. Cl.: G06V 20/54, G06V 20/58, G06V 20/40

(54) **AN AUDIO/VIDEO CAPTURING DEVICE, VEHICLE MOUNTED DEVICE, CONTROL CENTRE SYSTEM, COMPUTER PROGRAM AND METHOD**

(30) Priority: 13.11.2020 GB 202017908
(71) Applicant: Sony Semiconductor Solutions Corporation, Atsugi-shi, Kanagawa 243-0014 (JP)
(72) Inventor: FINATTI, Salvatore, Basingstoke, RG22 4SB (GB); AVITABILE, Antonio, Basingstoke, RG22 4SB (GB)
(74) Representative: D Young & Co LLP

(57) **Abstract**

A method of identifying an event, the method being carried out on an audio/video capturing device and comprising: capturing audio/video information of a real-world scene at a first time and a second time; detecting an event when a difference between the audio/video information captured at the first time and the audio/video information captured at the second time is above a threshold value; and providing, over a network, metadata describing the event and a unique geographical position of the event.

## Description

### BACKGROUND

### Field of the Disclosure

The present technique relates to an audio/video capturing device, vehicle mounted device, control centre system, computer program and method.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present technique.

As roads are becoming increasingly congested, people try to obtain as much information about a journey as possible prior to their departure. For example, people may look on Google Maps ^{®} to determine their best route and may use Street View ^{®} functionality to determine which road lane to take when at a junction. Moreover, with an increasing number of autonomous and semi-autonomous vehicles, which rely on current traffic information to plan their route, it is especially important for these types of vehicles to have current accurate traffic information.

However, much of this data is several months old and is usually based on historical trends of traffic. This means when events occur, such as road works being commenced, the information obtained by the user quickly becomes irrelevant. Moreover, even where real-time traffic updates do exist, they do not help the person driving in visualising the issue.

It is an aim of the disclosure to address this issue.

### SUMMARY

According to a first aspect, there is provided a method of identifying an event, the method being carried out on an audio/video capturing device and comprising: capturing audio/video information of a real-world scene at a first time and a second time; detecting an event when a difference between the audio/video information captured at the first time and the audio/video information captured at the second time is above a threshold value; and providing, over a network, metadata describing the event and a unique geographical position of the event.

According to another aspect, there is provided a method of updating a route to be taken by a vehicle, the method being carried out in a vehicle mounted device and comprising: receiving, over a network, metadata describing an event and a unique geographical position of the event, wherein the event is detected when a difference between audio/video information captured at a first time and the audio/video information captured at a second time is above a threshold value; and updating the route taken by the vehicle on the basis of the received metadata and the unique geographical position.

According to another aspect, there is provided a method of controlling a smart city, comprising: receiving over a network, metadata describing an event and a unique geographical position of the event, wherein the event is detected when a difference between audio/video information captured at a first time and the audio/video information captured at a second time is above a threshold value; controlling the smart city based on the metadata and the unique geographical position.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 shows a device 100 according to embodiments of the present disclosure;
Figures 2A and 2B show a real-world scene and a schematic view of a deployment of embodiments of the disclosure;
Figures 3A and 3B show the real-world scene and a schematic view of Figure 2A and 2B captured at the second time;
Figure 3C shows a segment according to embodiments;
Figures 4A and 4B show the real-world scene and a schematic view of Figure 2A and 2B captured at the second time;
Figures 5A and 5B show the real-world scene and a schematic view of Figure 2A and 2B captured at the second time;
Figure 6 shows a flow chart according to embodiments of the disclosure;
Figure 7 shows a vehicle mounted device 700 according to embodiments of the disclosure;
Figure 8 shows a central control system 800 according to embodiments of the disclosure; and
Figures 9 and 10 describe flow charts according to embodiments of the disclosure.

### DESCRIPTION OF THE EMBODIMENTS

Referring now to the drawings, wherein like reference numerals designate identical or corresponding parts throughout the several views.

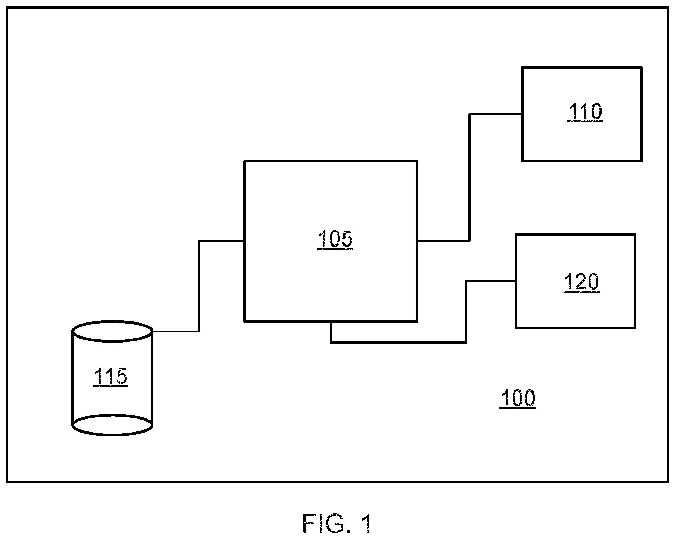

Figure 1 shows an audio/video capturing device 100 according to embodiments of the disclosure. The audio/video capturing device 100 includes a sensor 110. The sensor 110 may be composed of sensor circuitry which is, in embodiments, semiconductor circuitry. The sensor 110 is configured to capture audio/video information of a real-world scene at a first time and a second time. In embodiments, the sensor 110 may capture audio information and/or video information. In other words, the sensor 110 may, in embodiments, capture images (which may be still images or video) only or may capture audio only or may capture both audio and images.

The audio/video capturing device 100 also includes communication circuitry 120. The communication circuitry 120 is configured to provide, over a network, metadata describing the event and a unique geographical position of the event. This will be described later. Of course, the disclosure is not limited to this and other data may be provided over the network by the communication circuitry 120. The network may be a wired network, or a wireless network. For example, the communication circuitry 120 may allow data to be communicated over a cellular network such as a 5G network, or a Low Earth Orbit Satellite internet network or the like. This network may be a Wide Area Network such as the Internet or may be a Private Network.

In embodiments, the communication circuitry 120 includes Global Positioning System (GPS) functionality. This provides a unique geographical position of the audio/video capturing device 100. Of course, the disclosure is not so limited and any kind of mechanism that provides a unique geographical position of the audio/video capturing device 100 is envisaged. In other words, the unique geographical position may be a locally unique position (such as a location within a particular city or on a particular network).

Moreover, in embodiments, the audio/video capturing device 100 may use the characteristics of the sensor 110 to determine the geographical position of where an event takes place relative to the audio/video capturing device 100. This enables the audio/video capturing device 100 to calculate the unique geographical positon of the event which may be provided over a network. One such technique to establish the geographic position of the event knowing the geographic position of the audio/video capturing device 100 is to georeference the image captured by the audio/video capturing device 100.

The operation of the audio/video capturing device 100 is, in embodiments, controlled by processing circuitry 105. The processing circuitry 105 may be formed from semiconductor material and may be an Application Specific Integrated Circuit or may operate under the control of software. In other words, the processing circuitry 105 may operate under the control of software instructions stored on storage medium 115. The processing circuitry 105 is thus connected to the sensor 110 and the communication circuitry 120.

Additionally connected to the processing circuitry 105 is the storage 115. The storage 115 may be semiconductor storage or optically or magnetically readable storage. The storage 115 is configured to store software code according to embodiments therein or thereon.

Although the aforesaid sensor 110, communication circuitry 120, processing circuitry 105 and storage 115 is described as functionally different, it is envisaged that, in embodiments, these may all form part of the same circuitry. In other words, the audio/video capturing device 100 may comprise circuitry to perform the various functional steps.

In embodiments, the audio/video capturing device 100 is an IMX500 or IMX501 produced by Sony Corporation ^{®} or equivalent where a sensor (such as an image sensor) is provided in a device with processing capability. In some embodiments, such a sensor may be connected to the storage 115 over a network (such as a cellular network) rather than utilising on-board storage.

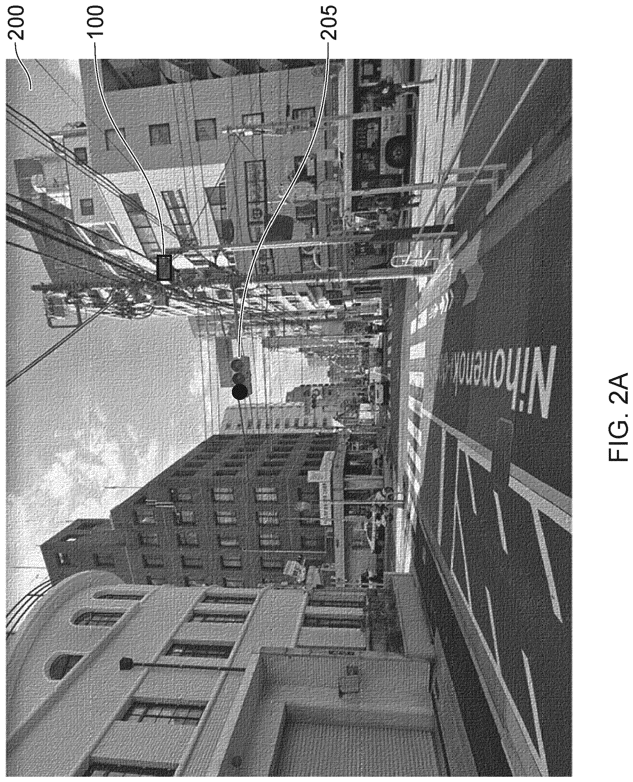

Referring to Figure 2A, a deployment 200 of the audio/video capturing device 100 according to embodiments is shown. This deployment 200 is at a real-world location and is, in this example, located at a crossroads in a city. In embodiments, the audio/video capturing device 100 is provided in a street light. However, of course, the disclosure is not so limited and the audio/video capturing device 100 may be located anywhere. For example, the audio/video capturing device 100 may be located on a building or in a piece of street furniture such as a traffic light, bench or the like. The advantage of locating the audio/video capturing device 100 in a piece of street furniture such as a street light or a traffic light is that electricity is already provided. However, the audio/video capturing device 100 may also be battery powered in embodiments.

Located at the crossroads is a traffic light 205. As noted above, a traffic light is an example of street furniture. In embodiments, the traffic light 205 is operational and showing a red light.

The audio/video capturing device 100 captures audio and/or video information from the real-world scene. In the situation where the audio/video capturing device 100 is located in a street light, the audio/video capturing device 100 is located above street level. This increases the area that is covered by the audio/video capturing device 100. In other words, by mounting the audio/video capturing device 100 above the street level, the audio/video capturing device 100 captures more of the real-world scene than if it were mounted at street level. In addition, the likelihood of an object obscuring the field of view of the audio/video capturing device 100 is reduced by mounting the audio/video capturing device 100 above street level.

The audio and/or video information is captured at a first time and a second, later, time. The period between the first time and the second time may be a predetermined period of time such as 5 seconds or may be longer or shorter than this. Moreover, the disclosure is not limited to a predetermined period of time.

The audio/video capturing device 100 then compares the audio and/or video information from the real world scene captured at the first time with the audio and/or video information captured at the second time and where the difference is above a threshold value, an event is detected. The difference defines the event and then metadata such as a segment from the audio and/or video information captured at the second time that includes the event is provided over the network. In the event that the metadata is a segment from the audio and/or video information captured at the second time, in embodiments, the audio and/or video information is anonymised prior to the segment being provided over the network as metadata. In other words, object recognition may be carried out on the segment and any information pertaining to an individual such as a car registration plate or the face of a person is blurred, covered or removed prior to the segment (including that information) is provided over the network. This ensures that no sensitive information relating to an individual is provided over the network. Of course, in the event that the captured information is audio information, the segment may be a segment of audio information. In this instance, the audio information may include an individual's voice or the spoken name of an individual. In this instance, that voice or name may be scrambled using known techniques.

Of course, the metadata is not limited to a segment and any kind of metadata such as a keyword or keywords (which may be predefined) describing the event may be provided instead or in addition to the segment.

In addition to the metadata, the unique geographical position of the event is also provided over the network.

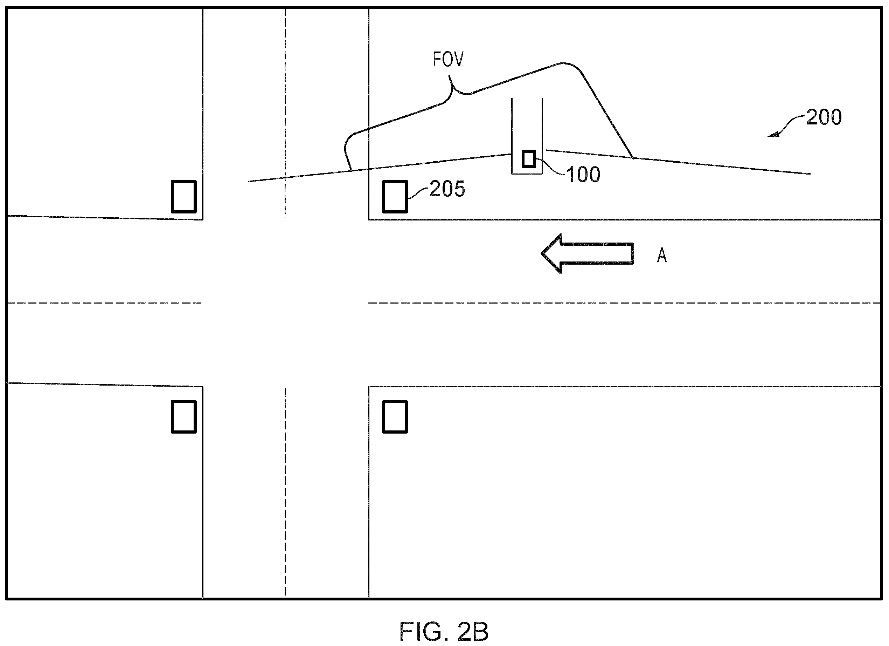

Figure 2B shows a simplified aerial view of the real-world scene shown in Figure 2A. In particular, the traffic light 205 and the audio/video capturing device 100 is shown. In real-world scene in Figure 2A is captured from direction A shown in Figure 2B. The Field of View (FOV) of the audio/video capturing device 100 is shown in Figure 2B.

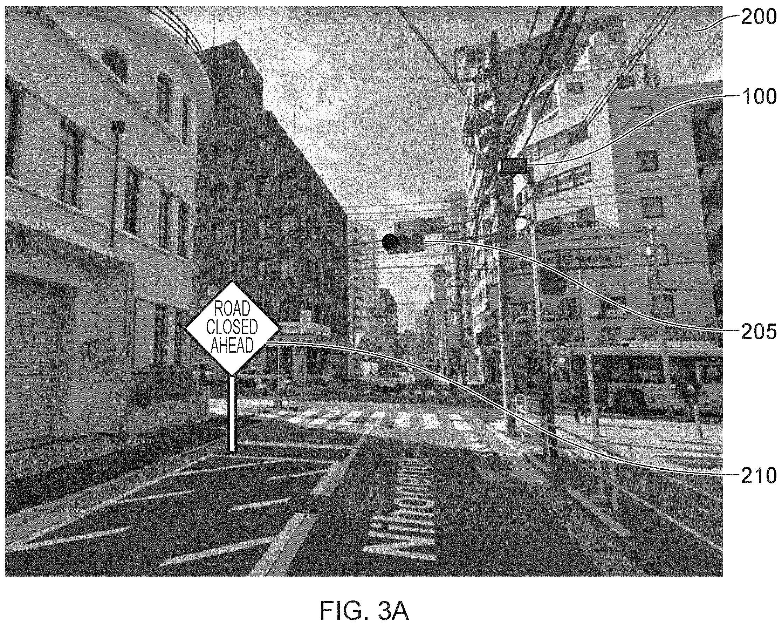

Figure 3A shows the real-world scene 200 of Figure 2A captured at the second time. In the embodiment of Figure 3A, the inclusion of a traffic sign 210 is the difference between the real-world scene captured at the first time and the second time.

This traffic sign is detected by comparing the image captured at the first time with the image captured at the second time.

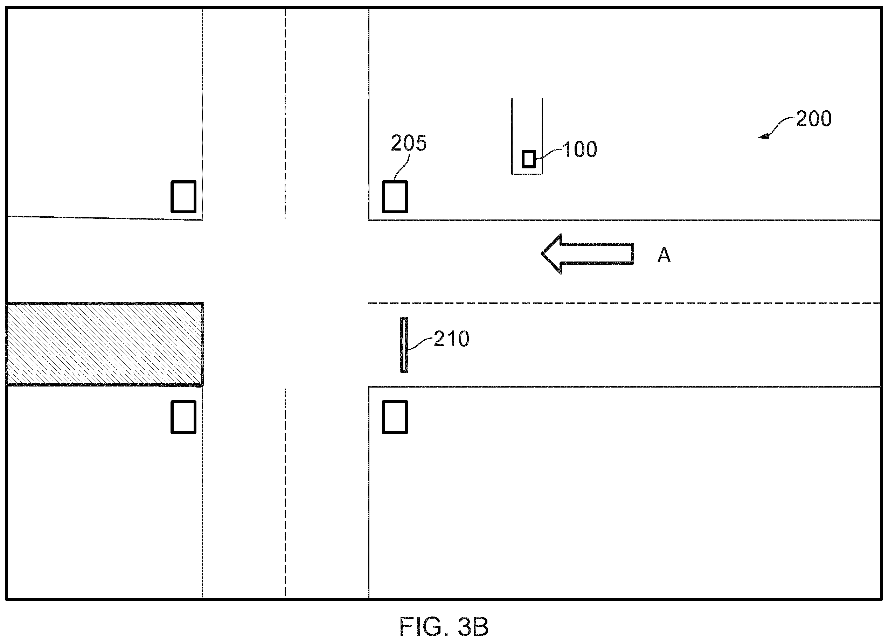

After detection of the traffic sign, in embodiments, the content of the traffic sign is identified. In this instance, the content of the road traffic sign states that the road ahead is closed. As the audio/video capturing device 100 knows the location of the road traffic sign and the orientation of the road traffic sign, the audio/video capturing device 100 can define the event. Specifically, the audio/video capturing device 100 defines the event as the road marked by hashed lines in Figure 3B as being closed.

This event may be checked by using a captured image and/or audio from a different audio/video capturing device located on the road marked by hashed lines. For example, audio and/or video from the different audio/video capturing device may indicate that no vehicles are on the road or that traffic levels along a diversionary route has increased.

This checking may occur by the different audio/video capturing device located on the road marked by hashed lines being polled by the audio/video capturing device 100 or by a central control system (not shown) connected to the network and which receives the event from the audio/video capturing device 100.

The central control system may be an operations centre controlling a smart city. As the skilled person will appreciate, these operations centres receive real-time information from traffic lights and other devices to control the flow of traffic around a city centre. These operations centres may close roads, change the timing on traffic lights and deploy diversions to reduce congestion. However, the information they receive must be accurate and must be real-time in order for the centres to operate correctly. Moreover, whilst scheduled maintenance affecting roads (such as digging up pipe work in the road) may be taken into account, this maintenance work frequently does not start or finish when scheduled and emergency work, such as fixing a broken water pipe, traffic accidents, or broken traffic lights are not taken into account in traffic management. Embodiments of the disclosure will greatly assist a central control system such as an operations centre controlling a smart city in accounting for these unscheduled incidents.

The different audio/video capturing device is, in embodiments, provided with the metadata and the unique geographical position of the event. The different audio/video capturing device will then perform the check in response to this poll. The different audio/video capturing device may then provide the results of the check to the audio/video capturing device 100 and/or the central control system.

In embodiments, in response to the poll, the different audio/video capturing device may change the time period between capturing audio/video information. In other words, the different audio/video capturing device may have a shorter or longer period between the first and second time in response to the poll. The change in the time period may be determined by the metadata provided to the different audio/video capturing device. For example, where the metadata indicates that the road is closed, the different audio/video capturing device may increase the time period between the first and second time as there are likely to be less events occurring on the road. On the other hand, for other audio/video capturing devices located in the vicinity (within a predetermined distance) of the event, they may decrease the time period between the first and second event as the likelihood of events occurring will likely increase. For example, more traffic will be on the surrounding roads in the event of a road closure which increases traffic flow and thus the likelihood of an accident of congestion or the like.

Of course, the disclosure is not so limited. In embodiments, the checking may be carried out by any different audio/video capturing device that is located within a predetermined distance of the event. For example, the audio/video capturing device 100 or the central control system may poll all different audio/video capturing devices within the predetermined distance.

In order to determine the content of the traffic sign, the audio/video capturing device 100 may perform object recognition to compare the captured traffic sign with known traffic signs. This is because there are usually a finite number of traffic signs that are used on roads. Each traffic sign is quite distinctive and has a definite meaning. Due to this, it is possible to predefine metadata associated with a particular traffic sign. For example, in the case of the embodiments of Figure 3A, the metadata may be "road ahead closed" which may be sent over the network either to the central control system or the different audio/video capturing device. Other road signs and their associated metadata are provided in table 1.

**Table 1**

| **Traffic Sign** | **Metadata** |
|---|---|
| Diversion | Diversion(direction_of_diversion) |
| Temporary Traffic Lights Ahead | Temporary_Traffic_Lights_Ahead |
| Temporary Bus Stop | Temporary_Bus_Stop |

As the metadata is sent together with the position of the event (i.e. the position of the traffic sign), it is possible to identify what type of obstruction exists and also where the obstruction exists. This facilitates traffic management.

Moreover, depending upon the type of traffic sign, the audio/video capturing device 100 may change the time between the first and second image being captured. For example, in the event of a temporary traffic light being placed in the road, the time period between the lights changing from stop to go may be determined by the audio/video capturing device 100 changing the time between the first and second image being captured. In other words, by altering the time period between the first and second image being captured, it is possible to determine when the temporary traffic lights change from red to green. As a further option, instead of altering the time period, the audio/video capturing device 100 may detect the moment the lights are made red and may detect when the lights go green and include this time in the metadata. If this metadata is provided to a central control system, the effect of the temporary traffic lights on traffic may be modelled and other traffic control measure such as phasing of permanent traffic lights may take place. This reduces traffic congestion.

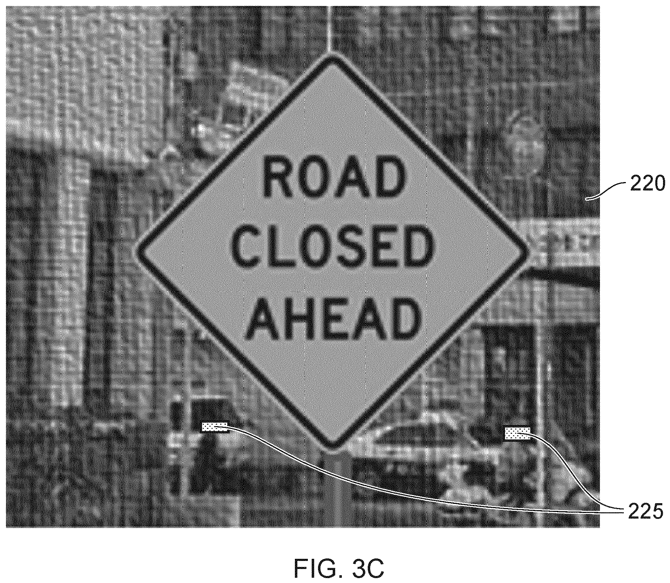

Referring to Figure 3C, other types of metadata are shown. In particular, in the embodiments of Figure 3C, the audio/video capturing device 100 extracts a segment 220 from the audio/video information captured at the second time. The segment 220 includes the traffic sign. In other words, the segment 220 includes the event. This segment is provided over the network as the metadata. This allows a different device, such as the central control system, to perform the analysis on the segment 220 to determine the content of the traffic sign which reduces processing with the audio/video capturing device 100. Moreover, as just a segment 220 is provided (rather than the entire image), network bandwidth usage is reduced.

As can be seen from segment 220, included with the event are two individuals. A first individual is a person walking on the pavement and the second individual is a person riding a motorbike. In order to protect the identity of the individual, their faces are obscured by blocks 225. In other words, the segment 220 is anonymised prior to providing the segment 220 over the network as the metadata. This means that the segment is not sent over the network whilst the segment 220 includes the faces of the individuals. This reduces the risk of personal information being provided over the network. Other examples of anonymising the segment include blurring vehicle registration plates, obscuring individual voices in any audio segments or the like.

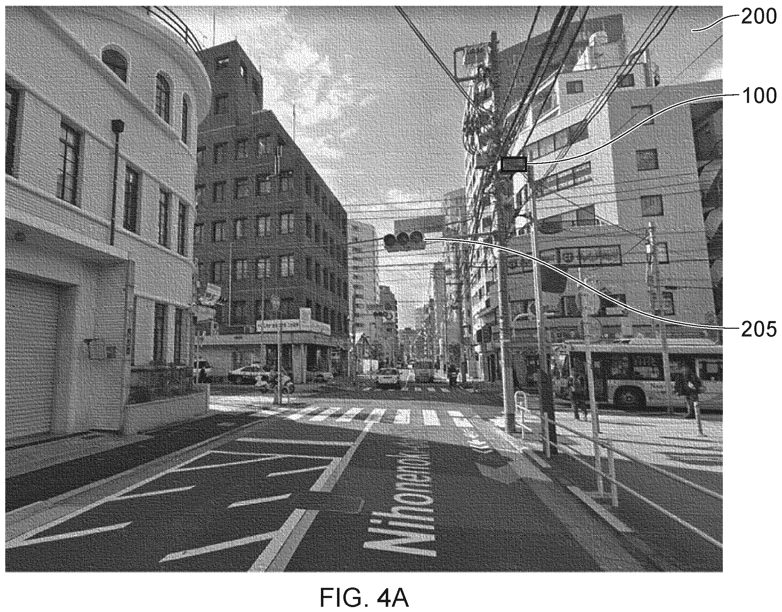

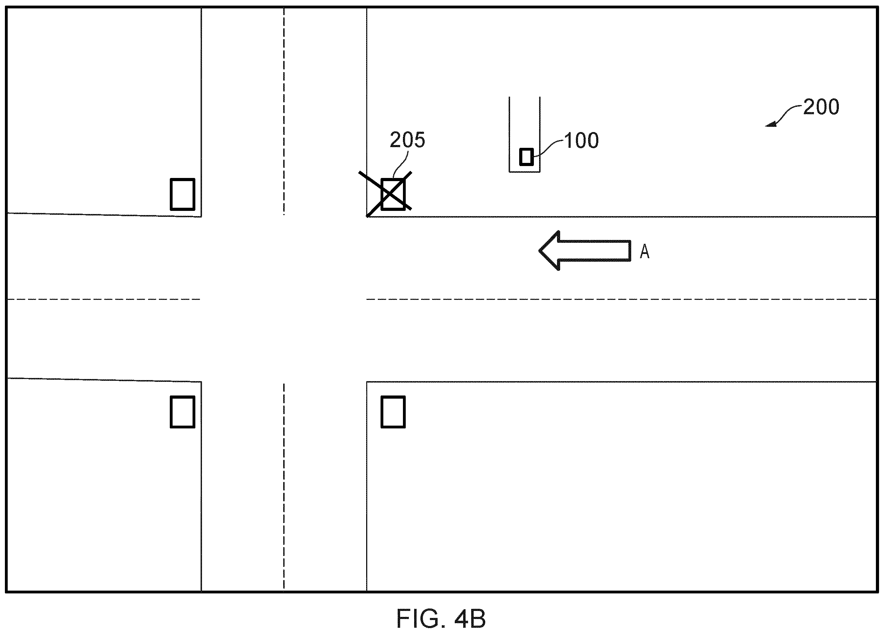

Referring to Figure 4A, the real-world scene of Figure 2A is shown. However, in this instance, the traffic light 205 has no light illuminated. Therefore, the video information captured by the audio/video capturing device 100 will show the traffic light 205 as malfunctioning due to the lack of a light being present. This is shown in Figure 4B with the traffic light 205 having a cross drawn through it. This malfunctioning street furniture, in embodiments, will be identified as an event and the unique geographical position of the traffic light 205, along with metadata identifying the event (which may be a segment of the video showing the traffic light 205 or a textual summary of the event) will be sent over the network. As noted above, the metadata and the unique geographical position of the event will, in embodiments, be provided to a different audio/video capturing device or to a central control system.

In the instance where a malfunctioning traffic light (or other piece of street furniture) is detected and the appropriate metadata and unique geographical position is passed to the central control system, the central control system may instruct a repair team to attend the malfunctioning street furniture to repair it. This prioritisation is determined based on the metadata. By prioritising the repair based on the metadata, the workforce is more efficiently used and so time taken to repair malfunctioning street furniture will reduce. Further, the likelihood of the malfunctioning street furniture increasing traffic congestion will also reduce. Moreover, as the metadata is provided, the central control system will know the type of incident and will be able to prioritise repairs. For example, if the malfunctioning street furniture is a traffic light which is one of a pair of traffic lights, the other traffic light in the pair will still direct traffic. Therefore, the impact of the malfunctioning traffic light on traffic congestion will be less than if the malfunctioning traffic light was the only traffic light controlling traffic flow at that junction. Therefore, this may be allocated a lower priority than if the malfunctioning traffic light was a single traffic light controlling traffic at the junction.

Other instances where a prioritisation of maintenance will be advantageous includes where the malfunctioning street furniture does not have an impact on traffic flow and congestion. For example, when a street light does not illuminate when required, this will not impact traffic congestion, but may impact security of pedestrians. Therefore, a medium priority may be allocated to such repair. However, in the instance that the malfunctioning street furniture is a broken bench seat, whilst this may be frustrating for a pedestrian wishing to sit down, this is not affecting their safety and so will be allocated a lower priority for repair.

Therefore, in embodiments of the disclosure, the metadata may be used to determine a prioritisation to allocate to the repair of the street furniture. This ensures that maintenance resources are correctly deployed and efficiently used.

Moreover, if the metadata and unique geographical position is sent to a real-time map provider (either via the central control system or directly), the location and nature of the malfunctioning street furniture can be provided to navigation systems in a vehicle to let the driver know of the issue and possibly suggest an alternative route (such as a satellite navigation system in a car) or to an autonomous or semi-autonomous vehicle so that an alternative route may be provided that avoids the area. This will reduce congestion in the city. Although in embodiments, the foregoing describes sending the metadata and unique geographical position is sent to a real-time map provider, the disclosure is not so limited and this information may also be provided to a vehicle manufacturer or to a traffic blog or website or to individual organisations such as haulage companies, taxi companies or the emergency services. In some instances, provisions to companies having a fleet of vehicles may reduce congestion considerably and provision to the emergency services may decrease the response time to an emergency situation.

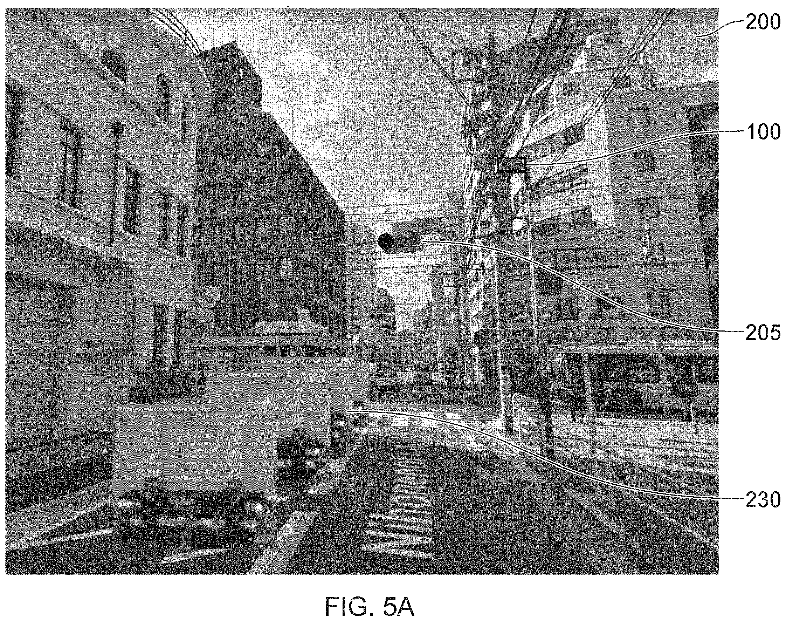

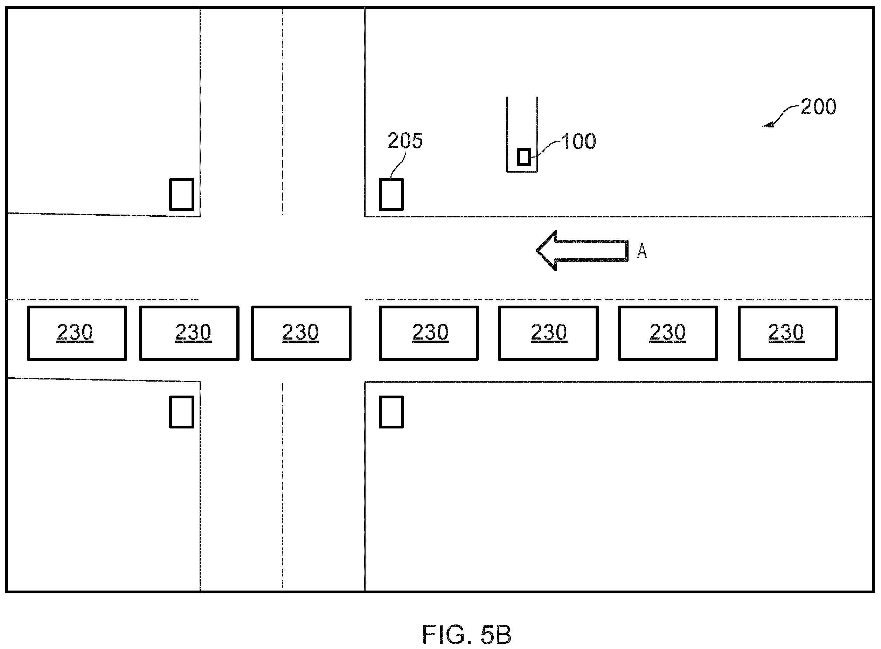

Referring to Figure 5A, the real-world scene of Figure 2A is shown. However, in this instance, a large number of vehicles 230 are stationary on the road. This is more easily seen in Figure 5B where each vehicle 230 is shown in an aerial view. In this instance, due to the number of vehicles located on the road, the audio/video capturing device 100 determines that traffic congestion along the road is too high and identifies the event as a traffic jam. In other words, the audio/video capturing device 100 determines that there is more than a predetermined number of vehicles on the road and thus identifies the event as a traffic jam.

In some instances, especially near to traffic lights, it is common to have a large number of vehicles in a field of view of the audio/video capturing device 100. Therefore, other mechanisms for determining that traffic congestion exists may be more appropriate than simply counting the number of vehicles on the road. In embodiments, therefore, the location of stationary vehicles may give an indication of traffic congestion. Specifically, as in Figure 5B, one or more vehicle may be stationary across the junction. This indicates that the vehicle trying to cross the junction was unable to due to traffic congestion.

In embodiments, the vehicles may not have moved between traffic light cycles. In other words, the vehicles did not move when the traffic lights turned green and subsequently the traffic lights turned red again with no vehicles having moved or having moved only a small distance.

In order to determine whether traffic is not moving freely due to congestion, therefore, in embodiments, the audio/video capturing device 100 determines the number of vehicles present in the video information captured at the second time and if the number of vehicles is above a threshold number of vehicles, the audio/video capturing device 100 captures video information at a third later time, and in the instance that the number of vehicles in the video information captured at the third time is the same as or greater than the number of vehicles in the video information captured at the second time, it is determined that an event is detected. The event, in this case, is a traffic jam.

The metadata and the unique geographical position of the event are sent over the network. In embodiments, the unique geographical location is determined to be the location of at least one vehicle in the traffic jam.

Again the metadata and the unique geographical position of the event may be sent to one or more different audio/video capturing devices or to a central control system to perform a check of the congestion event or to alter traffic management to try and address the congestion.

As noted in respect of Figure 4A and 4B, the metadata and the unique geographical position of the event may be sent to a real-time map provider or other organisation. The same applies to the disclosure of Figure 5A and 5B where the metadata and the unique geographical position of the event may be equally sent to such a real-time map provider or other organisation.

Although the foregoing has been described in respect of various traffic management issues, the disclosure is not so limited. In embodiments, the audio/video capturing device 100 is configured to identify empty car parking spaces. This information is then provided to a third party that may then notify vehicles. The vehicles may notify the driver of the vacant space or, in the case of an autonomous or semi-autonomous vehicle, may travel to the vacant parking space automatically. This has two distinct advantages. Firstly, this improves the efficiency with which parking is utilised in an urban environment as car parking spaces will be filled as soon as they become vacant. Secondly, this will reduce traffic congestion as in many instances, vehicles are unnecessarily travelling on roads numerous times whilst the driver looks for a car parking space. These vehicles also typically drive slowly and thus increase congestion considerably. Of course, although this is applicable to on-street parking, it is equally applicable to off-street parking.

In order to achieve this, the audio/video capturing device 100 is configured such that when the difference between the video information at the first time and the second time is a parking space becoming vacant, the event is detected and the audio/video capturing device 100 defines the event as the parking space becoming vacant and the unique geographical position of the event is the location of the parking space that has become vacant.

As noted above, in embodiments, audio information may be used in addition to or as an alternative to video information to determine an event has taken place. In embodiments, for example, the sound of a screeching tyre or a car crash on its own may indicate a traffic event. However, the sound of a car crashing may make the audio/video capturing device 100 capture video information from the real-world scene which may assist in indicating the type of event.

Similarly, other audio information may be used such as a person shouting aggressively may indicate a public order offence is taking place. Again, in response to this audio information, the video information may be captured by the audio/video capturing device 100 which may be used to define the event. In this instance, the unique position of the event may be position of the person shouting aggressively and the metadata may be a segment of the video showing the person. In this case, the anonymization of the segment will not take place and the segment may be sent to law enforcement. By selectively not anonymising the video, this allows the segment to be used as evidence by law enforcement. This allows law enforcement to attend the location of a possible public order offence quickly.

Although the foregoing describes the unique geographical position of the event being sent with the metadata, the disclosure is not so limited. In embodiments, the unique geographical position of the audio/video capturing device 100 may be sent instead of or in addition to the unique geographical position of the event.

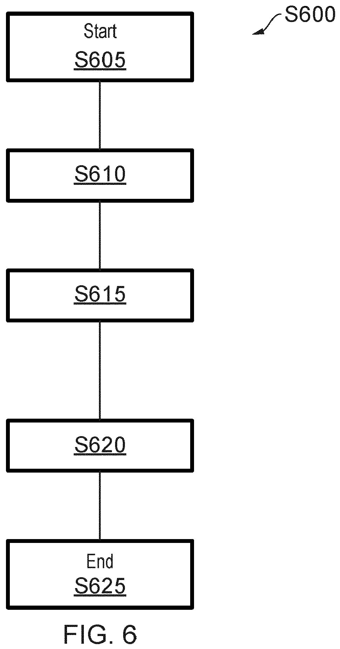

Figure 6 describes a flow chart according to embodiments of the disclosure. It is envisaged that the process S600 defined by the flow chart will be carried out by the processing circuitry 105.

The process S600 starts at step S605. The process S600 then moves to step S610 where the audio/video information of a real-world scene is captured at a first time and a second time. This is carried out by the sensor 110. The process then moves to step S615 where an event is detected when a difference between the audio/video information captured at the first time and the audio/video information captured at the second time is above a threshold value. The process then moves to step S620 where metadata is provided, over a network, the metadata describing the event and a unique geographical position of the event. The metadata and the unique geographical position of the event is provided over the network by the communication circuitry 120. The process then moves to step S625 where it ends.

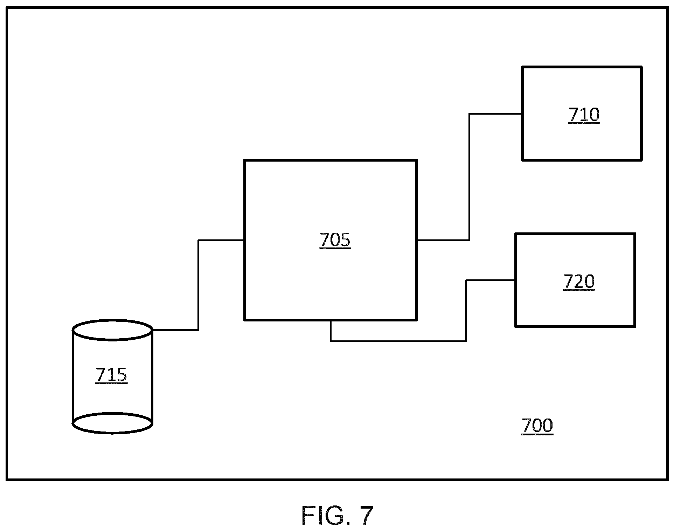

Figure 7 shows a vehicle mounted device 700 according to embodiments of the disclosure. It is envisaged that the vehicle mounted device 700 be located within a vehicle. The vehicle may be autonomous or semi-autonomous. In embodiments, the vehicle may be fully controlled by the user and the vehicle mounted device 700 may control a display shown to the user which includes a map or a satellite navigation system or the like. In embodiments, the vehicle mounted device 700 may be integrated into the vehicle or may be application software loaded onto a portable device such as a smartphone or the like.

The vehicle mounted device 700 includes vehicle mounted processing circuitry 705 that controls the operation of the vehicle mounted device 700.

The vehicle mounted processing circuitry 705 may be formed from semiconductor material and may be an Application Specific Integrated Circuit or may operate under the control of software. In other words, the vehicle mounted processing circuitry 705 may operate under the control of software instructions stored on vehicle mounted storage medium 715.

Additionally connected to the vehicle mounted processing circuitry 705 is the vehicle mounted storage 715. The vehicle mounted storage 715 may be semiconductor storage or optically or magnetically readable storage. The vehicle mounted storage 715 is configured to store software code according to embodiments therein or thereon.

The vehicle mounted device 700 also includes vehicle mounted communication circuitry 720. The vehicle mounted communication circuitry 720 is connected to the vehicle mounted processing circuitry 705 and is configured to receive, over a network, the metadata describing the event and the unique geographical position of the event. This will be received either via the central control system, directly from the audio/video capturing device 100 or via a third party provider such as a real-time map provider or the like. In this case, the vehicle mounted device 700 will be part of a system including the apparatus providing the metadata and the unique geographical position of the event. Of course, the disclosure is not limited to this and other data may be provided over the network by the vehicle mounted communication circuitry 720. The network may be a wired network, or a wireless network. For example, the vehicle mounted communication circuitry 720 may allow data to be communicated over a cellular network such as a 5G network, or a Low Earth Orbit Satellite internet network or the like. This network may be a Wide Area Network such as the Internet or may be a Private Network.

Additionally connected to the vehicle mounted processing circuitry 705 is display control circuitry 710. The display control circuitry 710 is configured to control a display (not shown) which indicates to the user the route to be travelled by the vehicle (either under control of the user or autonomously or semi-autonomously).

Although the display control circuitry 710, vehicle mounted communication circuitry 720, vehicle mounted processing circuitry 705 and vehicle mounted storage 715 is described as functionally different, it is envisaged that, in embodiments, these may all form part of the same circuitry. In other words, the vehicle mounted device 700 may comprise circuitry to perform the various functional steps.

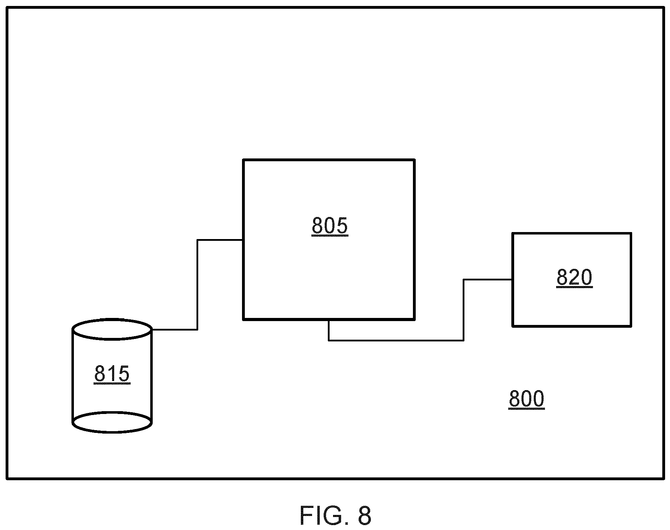

Figure 8 shows a central control system 800 according to embodiments of the disclosure. As noted above, the central control system 800 controls a smart city.

The central control system 800 includes central control system processing circuitry 805 that controls the operation of the central control system 800.

The central control system processing circuitry 805 may be formed from semiconductor material and may be an Application Specific Integrated Circuit or may operate under the control of software. In other words, the central control system processing circuitry 805 may operate under the control of software instructions stored on central control system storage medium 815.

Additionally connected to the central control system processing circuitry 805 is the central control system storage 815. The central control system storage 815 may be semiconductor storage or optically or magnetically readable storage. The central control system storage 815 is configured to store software code according to embodiments therein or thereon.

The central control system 800 also includes central control system communication circuitry 820. The central control system communication circuitry 820 is connected to the central control system processing circuitry 805 and is configured to receive, over a network, the metadata describing the event and the unique geographical position of the event. This will be received from the audio/video capturing device 100. In this case, the central control system 800 will be part of a system including the apparatus providing the metadata and the unique geographical position of the event. Of course, the disclosure is not limited to this and other data may be provided over the network by central control system communication circuitry 820. The network may be a wired network, or a wireless network. For example, the central control system communication circuitry 820 may allow data to be communicated over a cellular network such as a 5G network, or a Low Earth Orbit Satellite internet network or the like. This network may be a Wide Area Network such as the Internet or may be a Private Network.

Although the central control system communication circuitry 820, central control system processing circuitry 805 and central control system storage 815 is described as functionally different, it is envisaged that, in embodiments, these may all form part of the same circuitry. In other words, the central control system 800 may comprise circuitry to perform the various functional steps.

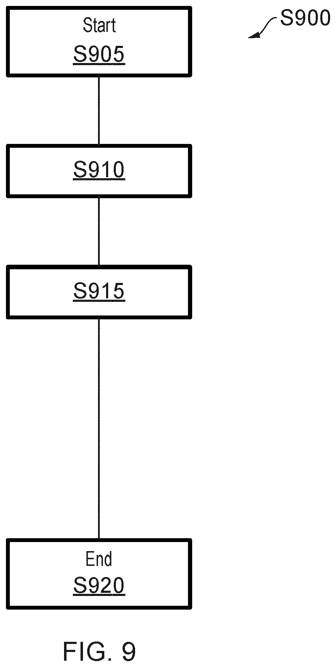

Figure 9 describes a flow chart according to embodiments of the disclosure. It is envisaged that the process S900 defined by the flow chart will be carried out by the vehicle mounted processing circuitry 705.

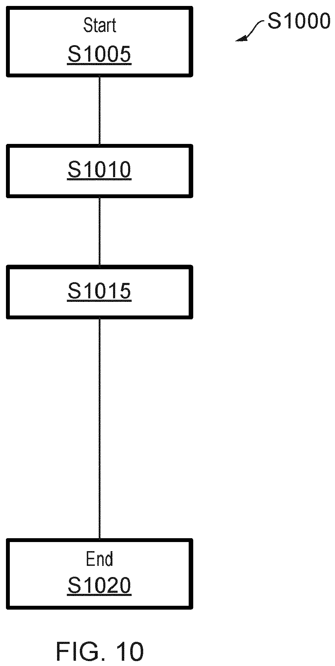

The process S900 starts at step S905. The process then moves to step S910 where metadata describing an event and a unique geographical position of the event is received by the vehicle mounted communication circuitry 720, wherein the event is detected when a difference between audio/video information captured at a first time and the audio/video information captured at a second time is above a threshold value. The process then moves to step S915 where the route taken by the vehicle is updated on the basis of the received metadata and the unique geographical position. Figure 10 describes a flow chart according to embodiments of the disclosure. It is envisaged that the process S1000 defined by the flow chart will be carried out by the central control system processing circuitry 805.

The process S1000 starts at step S1005. The process moves to step S1010 where metadata describing an event and a unique geographical position of the event is received by the central control system communication circuitry 820. The event is detected when a difference between audio/video information captured at a first time and the audio/video information captured at a second time is above a threshold value. The process then moves to step S1015 wherein the central control system processing circuitry 805 controls the smart city based on the metadata and the unique geographical position. The process then moves to step S1020 where it ends.

Numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

Embodiments of the present technique can generally described by the following numbered clauses:
1. A method of identifying an event, the method being carried out on an audio/video capturing device and comprising:
   capturing audio/video information of a real-world scene at a first time and a second time;
   detecting an event when a difference between the audio/video information captured at the first time and the audio/video information captured at the second time is above a threshold value; and
   providing, over a network, metadata describing the event and a unique geographical position of the event.
2. A method according to clause 1, comprising:
   extracting a segment from the audio/video information captured at the second time, the segment including the event, and;
   providing the segment over the network as the metadata.
3. A method according to clause 2, comprising:
   anonymising the audio/video information of the segment prior to providing the segment over the network as the metadata.
4. A method according to any preceding clause, wherein the audio/video information is video information.
5. A method according to clause 4, wherein in the instance that the difference is a traffic sign, the event is detected and the method comprises:
   identifying the content on the traffic sign and the description of the event is defined by the content of the traffic sign.
6. A method according to clause 5, wherein the metadata and the unique geographical position of the event is provided to a second audio/video capturing device within a predetermined distance of the event.
7. A method according to clause 4, wherein in the instance that the difference is a parking space becoming vacant, the event is detected and the method comprises:
   defining the event as the parking space becoming vacant and the unique geographical position of the event as the location of the parking space that has become vacant.
8. A method according to clause 4, wherein in the instance that the difference is a predetermined number of vehicles in the video information captured at the second time, the method comprises:
   capturing video information at a third time, and in the instance that the number of vehicles in the video information captured at the third time is the same as or greater than the number of vehicles in the video information captured at the second time, event is detected and the method comprises:
   defining the event as a traffic jam and the unique geographical position of the event as the location of at least one vehicle in the traffic jam.
9. A method according to clause 4, wherein in the instance that the difference is a malfunctioning piece of street furniture, the event is detected and the method comprises:
   defining the event as the piece of street furniture is malfunctioning and the unique geographical position of the event as the location of the piece of malfunctioning street furniture.
10. A method of updating a route to be taken by a vehicle, the method being carried out in a vehicle mounted device and comprising:
   receiving, over a network, metadata describing an event and a unique geographical position of the event, wherein the event is detected when a difference between audio/video information captured at a first time and the audio/video information captured at a second time is above a threshold value; and
   updating the route taken by the vehicle on the basis of the received metadata and the unique geographical position.
11. A method of controlling a smart city, comprising:
   receiving over a network, metadata describing an event and a unique geographical position of the event, wherein the event is detected when a difference between audio/video information captured at a first time and the audio/video information captured at a second time is above a threshold value;
   controlling the smart city based on the metadata and the unique geographical position.
12. A method according to clause 11, wherein the audio/video information is video information and in the instance that the difference is a malfunctioning piece of street furniture, the event is detected and the method comprises: defining the event as the piece of street furniture is malfunctioning and the unique geographical position of the event as the location of the piece of malfunctioning street furniture; and prioritising the repair of the malfunctioning piece of street furniture based on the metadata.
13. A computer program comprising computer readable code which, when loaded onto a computer, configures the computer to perform a method according to any one of clauses 1 to 12.
14. A computer program product configured to store the computer program of clause 13 therein or thereon.
15. An audio/video capturing device for identifying an event, the audio/video capturing device comprising circuitry configured to:
   capture audio/video information of a real-world scene at a first time and a second time;
   detect an event when a difference between the audio/video information captured at the first time and the audio/video information captured at the second time is above a threshold value; and
   provide, over a network, metadata describing the event and a unique geographical position of the event.
16. An audio/video capturing device according to clause 15, wherein the circuitry is configured to:
   extract a segment from the audio/video information captured at the second time, the segment including the event, and;
   provide the segment over the network as the metadata.
17. An audio/video capturing device according to clause 16, wherein the circuitry is configured to:
   anonymise the audio/video information of the segment prior to providing the segment over the network as the metadata.
18. An audio/video capturing device according to any one of clauses 15 to 17, wherein the audio/video information is video information.
19. An audio/video capturing device according to clause 18, wherein in the instance that the difference is a traffic sign, the event is detected and the circuitry is configured to:
   identify the content on the traffic sign and the description of the event is defined by the content of the traffic sign.
20. An audio/video capturing device according to clause 19, wherein the metadata and the unique geographical position of the event is provided to a second audio/video capturing device within a predetermined distance of the event.
21. An audio/video capturing device according to clause 18, wherein in the instance that the difference is a parking space becoming vacant, the event is detected and the circuitry is configured to:
   define the event as the parking space becoming vacant and the unique geographical position of the event as the location of the parking space that has become vacant.
22. An audio/video capturing device according to clause 18, wherein in the instance that the difference is a predetermined number of vehicles in the video information captured at the second time, the circuitry is configured to:
   capture video information at a third time, and in the instance that the number of vehicles in the video information captured at the third time is the same as or greater than the number of vehicles in the video information captured at the second time, event is detected and the circuitry is configured to:
   define the event as a traffic jam and the unique geographical position of the event as the location of at least one vehicle in the traffic jam.
23. An audio/video capturing device according to clause 18, wherein in the instance that the difference is a malfunctioning piece of street furniture, the event is detected and the circuitry is configured to:
   define the event as the piece of street furniture is malfunctioning and the unique geographical position of the event as the location of the piece of malfunctioning street furniture.
24. A vehicle mounted device for updating a route to be taken by a vehicle, the vehicle mounted comprising circuitry configured to:
   receive, over a network, metadata describing an event and a unique geographical position of the event, wherein the event is detected when a difference between audio/video information captured at a first time and the audio/video information captured at a second time is above a threshold value; and
   update the route taken by the vehicle on the basis of the received metadata and the unique geographical position.
25. A control centre system for controlling a smart city, the control centre system comprising configured to:
   receiving over a network, metadata describing an event and a unique geographical position of the event, wherein the event is detected when a difference between audio/video information captured at a first time and the audio/video information captured at a second time is above a threshold value;
   controlling the smart city based on the metadata and the unique geographical position.
26. A control centre system according to clause 25, wherein the audio/video information is video information and in the instance that the difference is a malfunctioning piece of street furniture, the event is detected and the method comprises: defining the event as the piece of street furniture is malfunctioning and the unique geographical position of the event as the location of the piece of malfunctioning street furniture; and prioritising the repair of the malfunctioning piece of street furniture based on the metadata.

## Claims

1. A method of identifying an event, the method being carried out on an audio/video capturing device and comprising:
capturing audio/video information of a real-world scene at a first time and a second time;
detecting an event when a difference between the audio/video information captured at the first time and the audio/video information captured at the second time is above a threshold value; and
providing, over a network, metadata describing the event and a unique geographical position of the event.

2. A method according to claim 1, comprising:
extracting a segment from the audio/video information captured at the second time, the segment including the event, and;
providing the segment over the network as the metadata.

3. A method according to claim 2, comprising:
anonymising the audio/video information of the segment prior to providing the segment over the network as the metadata.

4. A method according to claim 1, wherein the audio/video information is video information.

5. A method according to claim 4, wherein in the instance that the difference is a traffic sign, the event is detected and the method comprises:
identifying the content on the traffic sign and the description of the event is defined by the content of the traffic sign.

6. A method according to claim 5, wherein the metadata and the unique geographical position of the event is provided to a second audio/video capturing device within a predetermined distance of the event.

7. A method according to claim 4, wherein in the instance that the difference is a parking space becoming vacant, the event is detected and the method comprises:
defining the event as the parking space becoming vacant and the unique geographical position of the event as the location of the parking space that has become vacant.

8. A method according to claim 4, wherein in the instance that the difference is a predetermined number of vehicles in the video information captured at the second time, the method comprises:
capturing video information at a third time, and in the instance that the number of vehicles in the video information captured at the third time is the same as or greater than the number of vehicles in the video information captured at the second time, event is detected and the method comprises:
defining the event as a traffic jam and the unique geographical position of the event as the location of at least one vehicle in the traffic jam.

9. A method according to claim 4, wherein in the instance that the difference is a malfunctioning piece of street furniture, the event is detected and the method comprises:
defining the event as the piece of street furniture is malfunctioning and the unique geographical position of the event as the location of the piece of malfunctioning street furniture.

10. A method of updating a route to be taken by a vehicle, the method being carried out in a vehicle mounted device and comprising:
receiving, over a network, metadata describing an event and a unique geographical position of the event, wherein the event is detected when a difference between audio/video information captured at a first time and the audio/video information captured at a second time is above a threshold value; and
updating the route taken by the vehicle on the basis of the received metadata and the unique geographical position.

11. A method of controlling a smart city, comprising:
receiving over a network, metadata describing an event and a unique geographical position of the event, wherein the event is detected when a difference between audio/video information captured at a first time and the audio/video information captured at a second time is above a threshold value;
controlling the smart city based on the metadata and the unique geographical position.

12. A method according to claim 11, wherein the audio/video information is video information and in the instance that the difference is a malfunctioning piece of street furniture, the event is detected and the method comprises: defining the event as the piece of street furniture is malfunctioning and the unique geographical position of the event as the location of the piece of malfunctioning street furniture; and prioritising the repair of the malfunctioning piece of street furniture based on the metadata.

13. A computer program comprising computer readable code which, when loaded onto a computer, configures the computer to perform a method according to claim 1.

14. A computer program product configured to store the computer program of claim 13 therein or thereon.

15. An audio/video capturing device for identifying an event, the audio/video capturing device comprising circuitry configured to:
capture audio/video information of a real-world scene at a first time and a second time;
detect an event when a difference between the audio/video information captured at the first time and the audio/video information captured at the second time is above a threshold value; and
provide, over a network, metadata describing the event and a unique geographical position of the event.
